# EUROPEAN PATENT SPECIFICATION

(11) **EP 2 213 021 B1**
(45) Date of publication and mention of the grant of the patent: **16.10.2013**
(21) Application number: 08851826.1
(22) Date of filing: 19.11.2008
(51) Int. Cl.: H04L 25/06, H04L 7/04, H03K 5/08

(54) **DEVICE AND METHOD FOR SIGNAL DETECTION IN A TDMA NETWORK**
APPARAT UND VERFAHREN ZUR SIGNALDETEKTION IN EINEM TDMA-NETZWERK
DISPOSITIF ET PROCÉDÉ POUR LA DÉTECTION D'UN SIGNAL DANS UN RÉSEAU TDMA

(30) Priority: 20.11.2007 US 989194 P; 11.06.2008 US 60519 P
(43) Date of publication of application: 04.08.2010
(73) Proprietor: IMEC, 3001 Leuven (BE); Universiteit Gent, 9000 Gent (BE)
(72) Inventor: BAUWELINCK, Johan, B-9140 Temse (BE); DE RIDDER, Tine, B-9052 Zwijnaarde (BE); MÉLANGE, Cedric, B-8500 Kortrijk (BE); OSSIEUR, Peter, B-8200 Sint-Andries (Brugge) (BE); BAEKELANDT, Bart, B-9050 Gentbrugge (BE); QIU, Xing Zhi, B-9032 Wondelgem (BE); VANDEWEGE, Jan, B-9030 Mariakerke (BE)
(74) Representative: Van Bladel, Marc
(86) International application number: PCT/EP2008/065848
(87) International publication number: WO 2009/065861

(56) References cited:
- EP-A1- 0 681 378
- EP-A2- 1 357 685
- US-A- 5 412 498
- US-A1- 2002 027 689
- US-A1- 2007 071 455
- US-A1- 2008 124 092

## Description

### Field of the Invention

The present invention generally relates to the field of devices and methods for recovering signals over a passive optical network.

### Background of the Invention

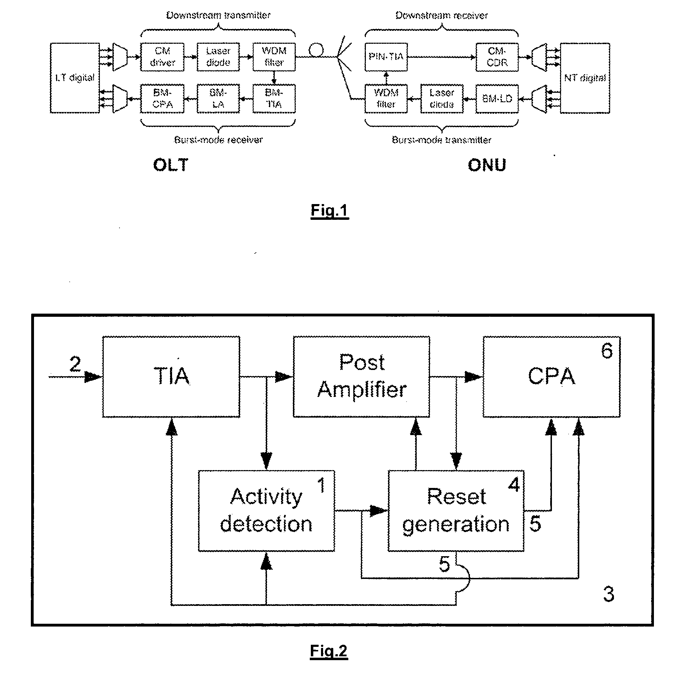

A burst-mode receiver (BM-RX) is typically located in the Optical Line Termination (OLT) of a Passive Optical network (PON), as shown in Fig.1. In general, the BM-RX comprises a photodiode, a burst-mode transimpedance amplifier (BM-TIA), a burst-mode limiting amplifier (BM-LA) and a burst-mode clock phase alignment (BM-CPA) block. In essence, the BM-RX converts the photodiode current into a voltage (BM-TIA), amplifies this voltage (amplitude recovery) and aligns this signal to the OLT clock (phase recovery). To achieve these functionalities the BM-RX requires time critical functions like activity detection, reset generation and clock phase alignment.

Activity detection indicates a data burst being received. The activity detection signal is typically used to initiate the reset generation, the decision threshold extraction and the clock phase aligner (CPA) (so for both amplitude and phase recovery). A reset signal is generated at the end of every burst to reset all settings and to prepare the BM-RX for the coming burst, so to initialize the extraction of the optimum gain setting and decision threshold (amplitude recovery). The data signals are aligned to the OLT clock (phase recovery) during Clock Phase alignment.

In prior art burst mode receivers activity is detected by comparing the incoming signal with a reference voltage. This reference voltage depends on the combined DC offsets from the unipolar signal, the preceding transimpedance amplifier (TIA) and offsets from the activity detect circuitry itself. This system can only be used if this DC offset is the same for all bursts. In long-range optical networks with optical amplifiers or when using TIAs that already compensate part of the offset, this is no longer the case.

Prior art BM-RXs wherein receiver settings such as gain and threshold setting must be adjusted quickly, need a reset signal to erase these settings and to prepare the BM-RX for a new packet. This requires an interface with the higher layers of the network, which in some applications may not be present, or additional I/O pins, which may not be desirable from a packaging point-of-view.

One such prior art BM-RX is disclosed in patent document US 5412498, which relates to a multi-RC time constant receiver. The invention aims at providing a protocol and a receiver for such protocol which is capable of supporting a wide dynamic range covering small signal levels (e.g. highly sensitive) and which requires short packet preambles. The proposed solution is based on the transmission of unipolar pulses. According to the protocol, information from a plurality of transmitters is transmitted in packets having a predictable time slot for each transmitter and whose magnitude has a wide dynamic range. Each packet includes a preamble having a first clamp interval training pulse in which no pulse is transmitted, and a second clamp interval training pulse in which a continuous pulse is transmitted. A clamp signal generator predicts the interval during which each packet of information is received and generates the clamp signals. This generator is thus aware of the receiver architecture and is adapted to produce suitable signals.

Prior art phase selection algorithms for high speed BM-RX are implemented in digital logic, needing several bytes to calculate the middle of the bit, to count the number of occurrences and to make a decision on the phase selection. Moreover, not all of them are tolerant against severe duty cycle distortion (DCD). This DCD tolerance is needed in e.g. optical amplified links, where the decision threshold of the receiver is often chosen lower than half the bit amplitude (because the "1" level is more noisy than the "0" level).

US patent application US2002/027689-A1 provides an optical receiver comprising a quasi-differentiator circuit for recovering data. The quasi-differentiator receives an input signal and provides a signal derived from transitions of the input signal. A quantizer circuit receives this derived signal and provides a digital signal corresponding to the derived signal. The noise level is increased by deriving the input signal at high speed, thus reducing the sensitivity of the receiver.

### Aims of the invention

The present invention aims to provide a device and method for detecting a signal, in particular a burst mode signal, in a TDMA based network capable of removing time-dependent DC offset without affecting the receiver sensitivity.

### Summary

The present invention relates to a circuit for detecting activity in a burst-mode receiver. The circuit is arranged for receiving an input signal and comprises a differentiator for detecting signal transitions in the input signal. The input signal comprises a preamble containing information on operating said differentiator. In a preferred embodiment said information in the preamble is a time constant. An appropriate time constant for differentiating the input signal need to be selected in order to remove the time-dependent DC offset, while maintaining information about zero-one and one-zero transitions. As every burst starts with a transition from an approximate DC signal to a data signal with fast rising and falling edges, the start of the burst can still be detected. This time-dependent offset must be removed to enable activity detection in burst-mode receivers. In application US2002/027689 the input signal is derived at high speed (with a time constant being a fraction of the bit period) for retrieving the bits at the expense of a substantially increased noise level. In the present application on the contrary, the signal is differentiated in order to detect activity. Therefore the time constant may be bigger (e.g. 6 to 7 times the bit period, corresponding to a cut-off frequency of about 250MHz in a 10Gbit/s system) so that the beginning of the preamble is detected (without significant noise increase), but not the individual bits as detection of the latter would significantly increase the noise.

In a preferred embodiment the circuit further comprises an integrator arranged for being fed with a differentiator output. The differentiated output is integrated with a time constant that is preferably the same as the one used in the differentiator. In this way the narrow output pulses of the differentiator are spread out.

The circuit advantageously further comprises a comparator. This comparator is arranged for comparing the integrated signal with a reference voltage. If the voltage reference is crossed, activity is detected. In an embodiment this reference voltage is chosen in accordance with the implemented differentiator and integrator, so that the weakest bursts are still detected reliably, but noise does not trigger the activity detection.

In an embodiment a front-end circuit is provided comprising the circuit for detecting activity and a reset circuit. The reset circuit is arranged for being fed with the input signal and for outputting a reset signal to the circuit for detecting activity. Prior art BM-RXs that need fast adjustment of receiver settings such as gain and threshold setting, require a reset signal to erase these settings and to prepare the BM-RX for a new packet. This requires an interface with the higher network layers, which in some applications may not be present, or requires additional I/O pins which may not be desirable from a packaging point-of-view.

In an embodiment a front-end circuit is provided further comprising a clock phase alignment circuit for recovering the phase of the input signal. The clock phase alignment circuit is arranged for being fed with the input signal and with the reset signal or preferably a delayed reset signal, so that the clock phase aligner (CPA) starts at the time the CPA preamble field is received, which comes after the preamble fields used for e.g. the activity detection and the threshold extraction. The clock phase alignment circuit generates a plurality of delayed versions of the said input signal. The phase is recovered by comparing this plurality of delayed versions with the clock signal of the burst-mode receiver. Prior art phase selection algorithms for high speed BM-RX are implemented in digital logic, whereby several bytes are needed to calculate the middle of the bit, count the number of occurrences and make a decision on the phase selection. Moreover, not all of them are tolerant against severe duty cycle distortion (DCD). This DCD tolerance is needed in e.g. optical amplified links, where the decision threshold of the receiver is often chosen lower than half the bit amplitude (because the "1" level is more noisy than the "0" level).

In an embodiment a method for receiving by means of the front-end circuit described above an input signal comprising a preamble received is presented. The method comprises the steps of detecting activity in a burst-mode receiver arranged for receiving the input signal and generating a reset signal for resetting the front-end circuit. The activity is detected by by differentiating the received input signal according to information comprised in the preamble.

### Brief Description of the Drawings

Preferred embodiments are described below in conjunction with the appended drawing figures, wherein like reference numerals refer to like elements in the various figures and wherein:

Fig. 1 represents a block diagram of the functional building blocks in a PON network.

Fig. 2 represents a block diagram of the building blocks of the present invention.

Fig. 3 represents a block diagram of the activity detection circuit.

Fig. 4 represents a block diagram of a proposed automatic reset detection circuit.

Fig.5 represents a block diagram of a top-level architecture of the oversampling burst-mode clock phase alignment.

Fig.6 represents more detail of the architecture shown in Fig.5.

Fig.7 represents a more detailed view on the clock phase alignment block of Fig.6.

Fig.8 represents a block diagram of a phase selection architecture.

Fig.9 represents schematically a phase selection algorithm.

### Detailed Description

The invention offers a solution for signal detection in a burst-mode or Time Domain Multiple Access (TDMA) system, such as PONs. The signal detection is performed by a burst mode receiver, which has to convert the photodiode current into a voltage (BM-TIA), amplify this voltage (amplitude recovery) and align this signal to the OLT clock (phase recovery). Although the present invention will be illustrated for a burst-mode system, the invention is not limited to these systems. The invention may also be used in for example continuous mode systems.

A receiver front-end circuit (3) arranged for receiving burst-mode signals in a passive optical network (PON) is described and schematically represented in Fig.2. For this purpose, the receiver must be capable of performing time critical functions like activity detection (1), reset generation (4) and clock phase alignment (6). The activity detection circuit (1) is an important part of the front-end circuit (3) since its output signal is typically used to initiate the reset generation, the decision threshold extraction and the clock phase aligner (CPA) (so for both amplitude and phase recovery).

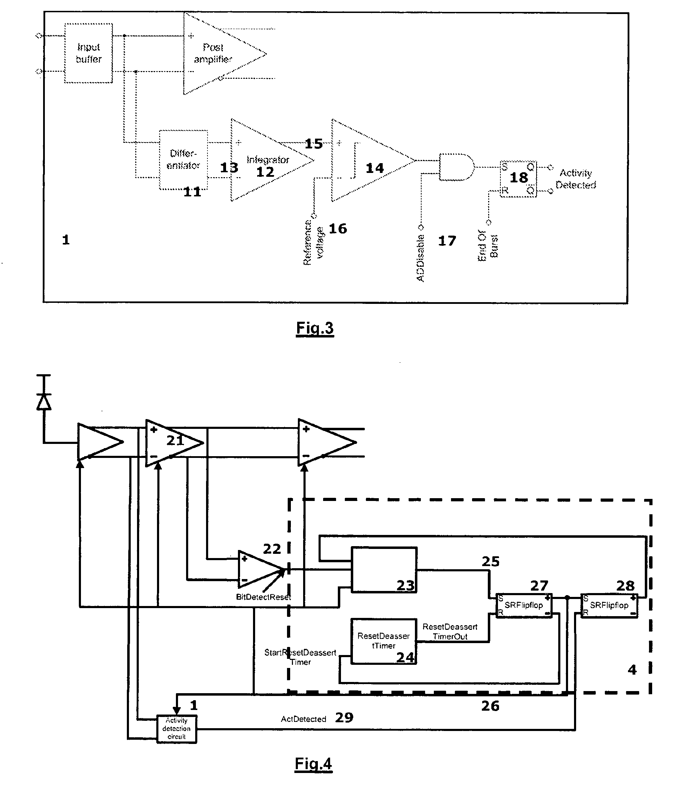

Activity detection is an indication of a data burst being received. An activity detect signal is automatically generated to indicate a data burst is being received and is used to detect the start of a new burst, for which the amplitude and phase is to be extracted. The activity detection circuit (1) comprises a differentiator (11) as shown in Fig.3. The activity detection is achieved by differentiating the input signal (2) according to information contained in the preamble of the input signal. In particular, the input signal is differentiated with a time constant related to this information, the time constant being selected so that the time-dependent DC-offset is removed, while information about zero-one and one-zero transitions is maintained. As every burst starts with a transition from an approximate DC signal to a data signal with fast rising and falling edges, the start of the burst can still be detected.

The differentiator outputs (13) are integrated by an integrator (12) and the resulting signal (15) is compared in (14) to a reference voltage level (16). If this reference is crossed, activity is detected. A latch (18) is used to create a signal that is high from the moment activity is detected until the end of the burst has been detected. The reference voltage (16) is determined by the differentiator (11) and integrator (12). The reference voltage (16) is chosen in accordance to the implemented differentiator (11) and integrator (12), so that the weakest bursts are detected reliably, but noise does not trigger the activity detection.

Fig.3 shows the block diagram of the activity detection circuit (1). Differentiating the input signal (2) removes time dependent offset in long-haul optical networks. It is necessary to remove this time dependent offset to enable detection of activity in BM-RXs. In the present invention the differentiator (11) is advantageously followed by an integrator (12) that spreads out the narrow output pulses of the differentiator (11). The output of the integrator (12) is then compared to a voltage reference (16). If the voltage reference (16) is crossed, activity is detected. The voltage reference (16) depends on the time constants of differentiator (11) and integrator (12) and on the total amount of noise in the optical network. The voltage needs to be sufficiently high above the integrator output in the absence of a signal in order to avoid activity detection when there is none. The ADDisable (17) (activity detect disable) is low during reset and remains low for a certain period of time after the release of the reset. This avoids passing on activity detect signals due to reset transients in other parts of the receiver. ADDisable (17) is set high again before the arrival of the new burst. A latch (18) is needed to set the activity detected signal high from the first time the comparator detects activity. The latch (18) is reset at the end of the burst.

The front-end circuit (3) as in Fig.2 comprises not only the activity detection circuit (1), but further also a reset circuit (4). The latter circuit generates a reset signal (5) at the end of every burst to reset all settings of the BM-RX and to prepare the BM-RX for a new incoming burst. A reset signal (5) for the fast adjustment of BM-RX settings such as decision threshold level and gain setting is generated automatically. This is achieved by monitoring the incoming data signal for gaps during which no data transition occurs for a predefined amount of time. If such a gap is detected, it is assumed that the previous packet has ended and that the receiver needs to prepare for a new incoming packet, possibly with an entirely different amplitude and phase. In this way a BM-RX can operate without any time critical information from higher network layers, thus functioning as a transparent regenerator.

The incoming data signal (coming out of a postamplifier and entering the reset circuit (4)) is monitored for gaps that exceed a predefined amount of time. From these observations it is possible to generate a reset signal. The basic principle is based upon a timer. A timer is a circuit whose output becomes high a predefined time after its input became high. The timer can be reset by bringing its input low again. If this happens before the predefined time has passed, then the output of the timer remains low.

In the present invention a timer is reset each time a 1 is observed on the incoming signal. If no 1's are observed for the time defined by this timer, the timer output becomes high, signaling that a reset signal must be generated. By carefully choosing the time measured by the timer, one can take care that a reset signal is generated during the guard time of the packets. Note that the duration of the maximum number of consecutive 0's should be shorter than the minimum guard time between packets. Once the timer has indicated that a reset signal is to be generated, a second timer is started whose interval length defines the reset pulse length. Finally, by deactivating the first timer using the activity detection circuit that detects whether a burst has arrived at the input of the BM-RX, it is ensured that reset signals are generated within the guard time between bursts, irrespective of the length of the burst, and the length of the guard time.

The detailed principle is shown in Fig.4. The outputs of the first stage of the postamplifier (21) are used as the inputs of a comparator Comp1 (22), which is a fast comparator that can react to individual bits in the input data signal. The output of this comparator is used to reset the timer *ResetTimer* (23). If no such reset occurs during a predefined time measured by the timer *ResetTimer* (23), this implies that no data transition has occurred during this predefined time gap and a reset signal should be generated. On the contrary, if a data bit comes in, the comparator Comp1 (22) resets the timer *ResetTimer* (23) and no reset signal is generated. The length of the reset signal itself is defined by the *ResetDeassertTimer* (24). When a time gap has been detected by the timer *ResetTimer* (23), *ResetTimerOut* (25) becomes high, thus setting the output Reset (26) of the SR latch (27) high. This SR latch (27) also activates the timer *ResetDeassertTimer* (24). Once this timer has measured a predefined amount of time, the SR latch (27) output *Reset* (26) is reset again and, hence, a reset signal has been generated whose length is defined by the *ResetDeassertTimer* (24). As in this way *ResetTimer* (23) and *ResetDeassertTimer* (24) keep resetting each other, a second SR latch (28) is used in combination with the *ActDetected* (29) signal. The activity detection circuit (1) generates a pulse on the *ActDetected* (29) output each time a new packet arrives at the input of the BM-RX.

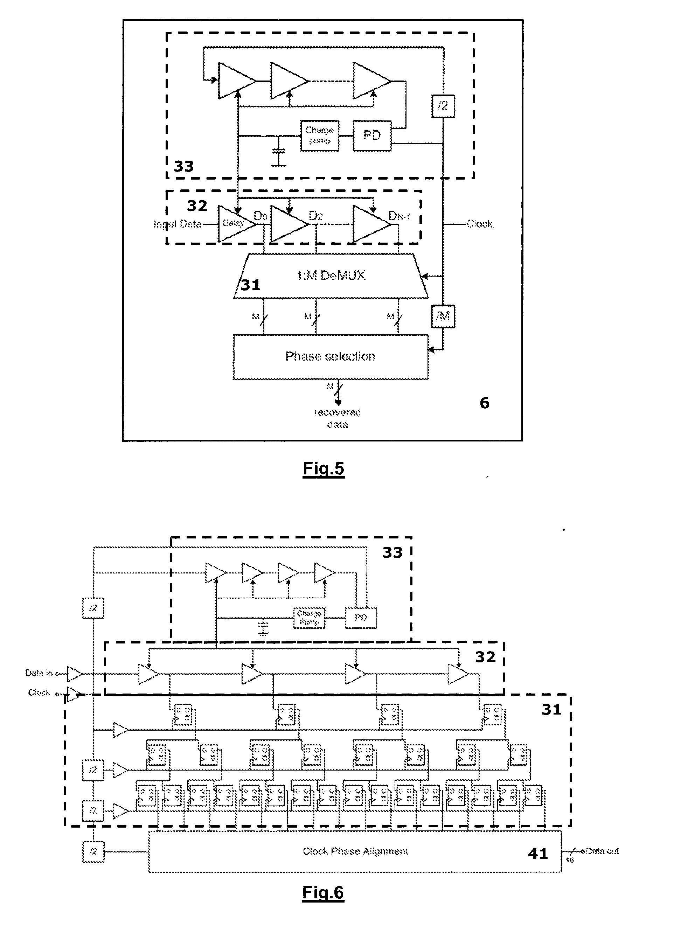

The front-end circuit (3) of the present invention preferably further comprises a clock phase alignment circuit (6). The clock phase and the received burst-mode signal data are recovered using an oversampling architecture. The incoming data stream is oversampled (e.g. 4 times) using a delay line. Subsequently these samples are demultiplexed to parallel bit sequences at lower speed. At this lower frequency the clock phase is recovered by means of the clock phase alignment block (41) in Fig.6. By storing the results of the phase selection algorithm for a certain time and adding them to the current results, slow tracking of the clock phase is possible.

Prior art phase selection algorithms for high speed BM-RX are implemented in digital logic, needing several bytes to calculate the middle of the bit, count the number of occurrences and make a decision on the phase selection. Moreover, not all of them are tolerant against severe duty cycle distortion (DCD). This DCD tolerance is needed in e.g. optical amplified links, where the decision threshold of the receiver is often chosen lower than half the bit amplitude (because the "1" level is more noisy than the "0" level).

Fig.5 depicts the top-level architecture of the circuit (6) according to the invention. First, all received bits are oversampled with a factor N. This can be realized by using a delay line and N sampling DFFs at the received bit rate, as shown in Fig.5. The latter approach has the advantage that no components with a speed higher than the received bit rate are required, achieving the highest throughput within a certain chip fabrication process and consuming less power. In the embodiment shown in Fig.5 the delay line transporting the input data is controlled by a master delay locked loop (DLL) (33).

In a second phase the samples are deserialized by a 1:M demultiplexer (31) (DeMUX) into N x M parallel bit streams at lower speeds as shown in Fig.5. A possible implementation of the DeMUX is shown in Fig.6. This creates more time for the tap selection algorithm, making it more power efficient, and facilitates the interface to the following digital block performing higher layer tasks (e.g. delimiter detection, byte alignment, error correction, etc.).

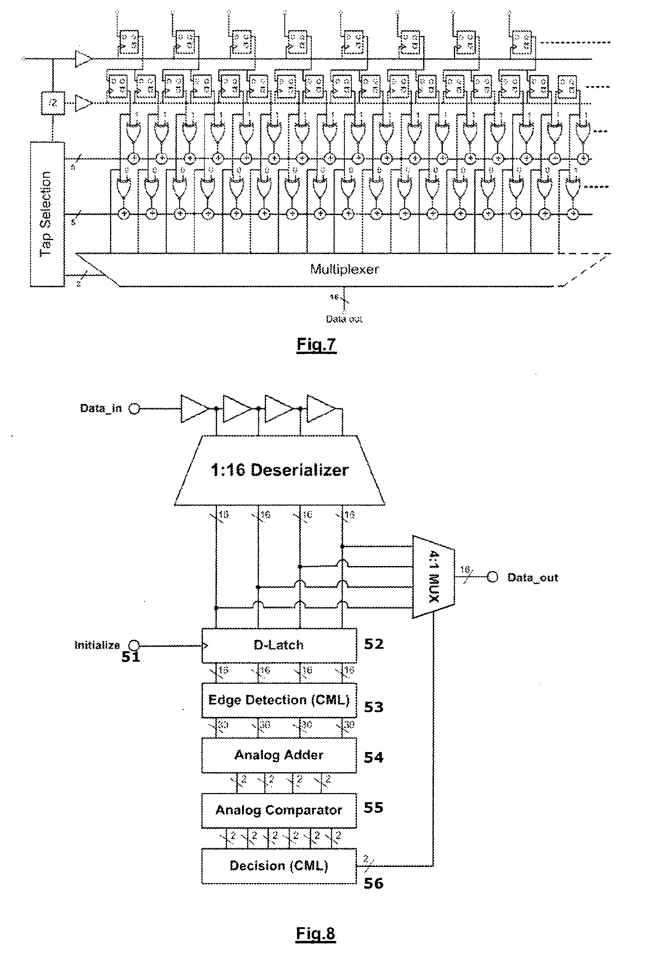

In the phase selection block (41) the samples resulting in the lowest Bit Error Rate are selected and sent to the output. Another possibility is that the phase selection is fed back to a high speed multiplexer directly connected to the delay line (32), providing the recovered data in a serial form. The next paragraph elaborates on the implementation of this phase selection block, shown in Fig.7 (the flip-flops at the top are part of the DeMUX), in greater detail.

Fig.8 shows the phase selection architecture. An input signal 'Initialize' (51) clocks the deserialized oversampled (4x oversampling is used in the current embodiment) input data into a D-Latch (52). This starts the clockless phase selection algorithm. The decision on the best sampling phase is based on the number of bits that are being latched (16 in this particular embodiment).

In a first step (53) both rising and falling edges between successive samples are detected using logic AND gates with one inverted input. In the embodiment of Fig.8 there are 4 x 15 = 60 positions where a rising or a falling edge can occur. In the next step an analog current adder (54) is used to determine how many times an edge has occurred between each of the possible sampling phases. The digital outputs of the edge detector are converted to a current by means of current switches or differential transistor pairs. Consequently, the summed currents are converted to a voltage by resistors. In the following stage these voltages are compared to each other with analog comparators (55). Also current comparators can be used instead of the voltage comparators. Based on the comparator outputs, the places where respectively the highest number of rising and falling edges have occurred can be deduced with simple combinatorial logic (56).

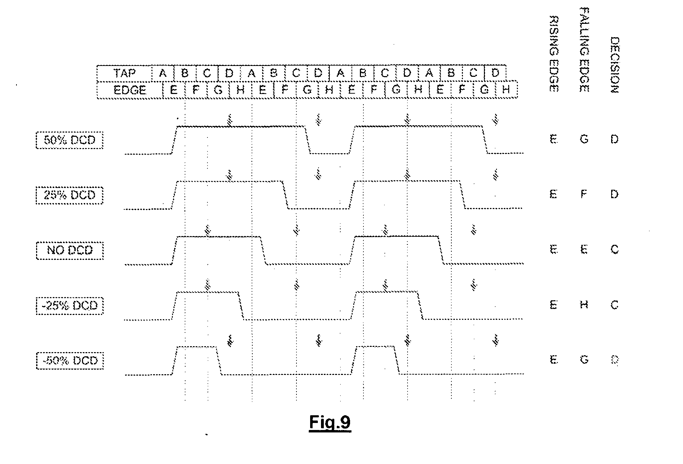

Once the average locations of the edges are known, the phase selection algorithm selects the ideal tap for the rest of the burst using only little extra combinatorial logic. The basis for this decision is illustrated in Fig.9.

In the embodiment with 4 times oversampling the algorithm is certainly robust against a DCD of 25%. Because there is only information available about the location of the edges, there is an ambiguity at a DCD of 50%. Negative and positive DCD cannot be separated. Because the noise in most optical networks is signal dependent, more noise exists on ones than on zeros. Therefore, the decision threshold in most cases lies beneath the middle of the eye diagram. Therefore positive DCD is most likely to occur. When this ambiguity occurs, positive DCD is assumed and the ideal phase corresponding to this case is selected, rather than the one corresponding to the negative DCD case.

The architecture shown in Fig.5 can be made multi-rate capable by decimating the received samples before feeding them to the phase selector. If the bit rate is halved, only the samples from one out of two sampling DFFs have to be used. If the bit rate is divided by four, only the samples from one out of four sampling DFFs have to be used and so on. The selection on the bits that should be used for the phase selection happens at a lower demultiplexed speed and does not impose critical interventions to the single rate implementation.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A circuit for detecting activity (1) in a burst-mode receiver arranged for receiving an input signal (2) comprising a preamble, **characterised in that** said circuit comprising a differentiator (11) for detecting signal transitions in said input signal (2) and **in that** said preamble comprises information on operating said differentiator, said information being a time constant.

2. A circuit (1) as in claim 1 further comprising an integrator (12) arranged for being fed with an output (13) of said differentiator.

3. A circuit (1) as in claim 1 further comprising a comparator (14) being fed by an output of said integrator (15) and a reference voltage (16).

4. A circuit (1) as in claim 2 whereby said reference voltage (16) is determined by said differentiator (11) and by said integrator (12).

5. A front-end circuit (3) comprising a circuit for detecting activity (1) as in any of the previous claims and a reset circuit (4), said reset circuit (4) arranged for being fed with said input signal (2) and for outputting a reset signal (5) to said circuit for detecting activity (1).

6. A front-end circuit (3) as in claim 5 whereby said reset circuit (4) comprises a first timer (23) for timing the period between two reset signals and a second timer (24) for determining the length of said reset signal (5).

7. A front-end circuit (3) as in claim 5 or 6 further comprising a clock phase alignment circuit (6) for recovering the phase of said input signal (2), whereby said clock phase alignment circuit (6) is arranged for being fed with said input signal (2) and with said reset signal (5) and for generating a plurality of delayed versions of said input signal (2), whereby said phase is recoverable by comparing said plurality of delayed versions with the clock signal of a burst-mode receiver.

8. A method for receiving with a front-end circuit (3) as in any of claims 5 to 7 an input signal (2) comprising a preamble, said method comprising the steps of:
- detecting activity in a burst mode receiver arranged for receiving said input signal (2) by differentiating said input signal according to information comprised in said preamble; said information being a time constant, so that signal transitions in said input signal can be detected,
- generating a reset signal (5) for resetting said front-end circuit (3).

## Patentansprüche

1. Schaltung zum Detektieren von Aktivität (1) in einem Burst-Mode-Empfänger, ausgelegt zum Empfangen eines eine Präambel umfassenden Eingangssignals (2), **dadurch gekennzeichnet, dass** die Schaltung einen Differenzierer (11) zum Detektieren von Signalübergängen in dem Eingangssignal (2) umfasst und dass die Präambel Informationen über das Betreiben des Differenzierers umfasst, wobei die Informationen eine Zeitkonstante sind.

2. Schaltung (1) nach Anspruch 1, weiterhin umfassend einen Integrierer (12), ausgelegt zur Speisung mit einem Ausgangssignal (13) des Differenzierers.

3. Schaltung (1) nach Anspruch 1, weiterhin umfassend einen Vergleicher (14), der durch ein Ausgangssignal des Integrierers (15) und eine Referenzspannung (16) gespeist wird.

4. Schaltung (1) nach Anspruch 2, wobei die Referenzspannung (16) durch den Differenzierer (11) und den Integrierer (12) bestimmt wird.

5. Front-End-Schaltung (3), umfassend eine Schaltung zum Detektieren von Aktivität (1) wie in einem der vorhergehenden Ansprüche und eine Rücksetzschaltung (4), wobei die Rücksetzschaltung (4) ausgelegt ist zum Speisen mit dem Eingangssignal (2) und zum Ausgeben eines Rücksetzsignals (5) an die Schaltung zum Detektieren von Aktivität (1).

6. Front-End-Schaltung (3) nach Anspruch 5, wobei die Rücksetzschaltung (4) einen ersten Zeitgeber (23) zur zeitlichen Steuerung der Periode zwischen zwei Rücksetzsignalen und einen zweiten Zeitgeber (24) zum Bestimmen der Länge des Rücksetzsignals (5) umfasst.

7. Front-End-Schaltung (3) nach Anspruch 5 oder 6, weiterhin umfassend eine Taktphasensynchronisierungsschaltung (6) zum Wiedergewinnen der Phase des Eingangssignals (2), wobei die Taktphasensynchronisierungsschaltung (6) ausgelegt ist zur Speisung mit dem Eingangssignal (2) und mit dem Rücksetzsignal (5) und zum Generieren mehrerer verzögerter Versionen des Eingangssignals (2), wobei die Phase wiedergewonnen werden kann durch Vergleichen der mehreren verzögerten Versionen mit dem Taktsignal eines Burst-Mode-Empfängers.

8. Verfahren zum Empfangen, mit einer Front-End-Schaltung (3) nach einem der Ansprüche 5 bis 7, eines eine Präambel umfassenden Eingangssignals (2), wobei das Verfahren die folgenden Schritte umfasst:
- Detektieren von Aktivität in einem Burst-Mode-Empfänger, ausgelegt zum Empfangen des Eingangssignals (2) durch Differenzieren des Eingangssignals gemäß in der Präambel enthaltenen Informationen; wobei die Informationen eine Zeitkonstante sind, so dass Signalübergänge in dem Eingangssignal detektiert werden können;
- Generieren eines Rücksetzsignals (5) zum Zurücksetzen der Front-End-Schaltung (3).

## Revendications

1. Un circuit de détection d'activité (1) dans un récepteur en mode rafale agencé de façon à recevoir un signal en entrée (2) comprenant un préambule, **caractérisé en ce que** ledit circuit comprend un différentiateur (11) pour la détection de transitions de signal dans ledit signal en entrée (2) et **en ce que** ledit préambule contient une information relative au fonctionnement dudit différentiateur, ladite information étant une constante temporelle.

2. Un circuit (1) selon la Revendication 1 comprenant en outre un intégrateur (12) agencé de façon à être alimenté avec une sortie (13) dudit différentiateur.

3. Un circuit (1) selon la Revendication 1 comprenant en outre un comparateur (14) qui est alimenté par une sortie dudit intégrateur (15) et une tension de référence (16).

4. Un circuit (1) selon la Revendication 2 grâce auquel ladite tension de référence (16) est déterminée par ledit différentiateur (11) et par ledit intégrateur (12).

5. Un circuit d'extrémité avant (3) comprenant un circuit de détection d'activité (1) selon l'une quelconque des Revendications précédentes et un circuit de réinitialisation (4), ledit circuit de réinitialisation (4) étant agencé de façon à être alimenté avec ledit signal en entrée (2) et de façon à produire en sortie un signal de réinitialisation (5) vers ledit circuit de détection d'activité (1).

6. Un circuit d'extrémité avant (3) selon la Revendication 5 grâce auquel ledit circuit de réinitialisation (4) comprend une première horloge (23) destinée à la synchronisation de la période entre deux signaux de réinitialisation et une deuxième horloge (24) destinée à la détermination de la longueur dudit signal de réinitialisation (5).

7. Un circuit d'extrémité avant (3) selon la Revendication 5 ou 6 comprenant en outre un circuit d'alignement de phase d'horloge (6) destiné à la récupération de la phase dudit signal en entrée (2), grâce à quoi ledit circuit d'alignement de phase d'horloge (6) est agencé de façon à être alimenté avec ledit signal en entrée (2) et avec ledit signal de réinitialisation (5) et de façon à générer une pluralité de versions retardées dudit signal en entrée (2), grâce à quoi ladite phase est récupérable par la comparaison de ladite pluralité de versions retardées au signal d'horloge d'un récepteur en mode rafale.

8. Un procédé de réception avec un circuit d'extrémité avant (3) selon l'une quelconque des Revendications 5 à 7 d'un signal en entrée (2) contenant un préambule, ledit procédé comprenant les opérations suivantes :
- la détection d'une activité dans un récepteur en mode rafale agencé de façon à recevoir ledit signal en entrée (2) par la différenciation dudit signal en entrée selon une information contenue dans ledit préambule, ladite information étant une constante temporelle, de sorte que des transitions de signal dans ledit signal en entrée puissent être détectées,
- la génération d'un signal de réinitialisation (5) destinée à la réinitialisation dudit circuit d'extrémité avant (3).
